# FASCICULE DE BREVET EUROPEEN

(11) **EP 2 565 610 B1**
(45) Date de publication et mention de la délivrance du brevet: **29.10.2014**
(21) Numéro de dépôt: 11306074.3
(22) Date de dépôt: 29.08.2011
(51) Int. Cl.: G01K 17/08, F24D 19/10, G01R 11/24

(54) **Répartiteur de coût de chauffage**
Heizkostenverteiler
Heating cost distributor

(43) Date de publication de la demande: 06.03.2013
(73) Titulaire: Itron France, 92130 Issy-Les-Moulineaux (FR)
(72) Inventeur: Guillot-Jerôme, Denis, 01310 Buellas (FR); Arnaud-Godet, Brice, 71850 Charnay les Macon (FR)
(74) Mandataire: Howson, Richard G.B.

(56) Documents cités:
- DE-B3-102004 023 990
- DE-B3-102009 005 490
- DE-B3-102010 003 967
- DE-U1- 29 719 339

## Description

L'invention concerne un répartiteur de coût de chauffage.

Elle concerne plus précisément un répartiteur de coût de chauffage destiné à être fixé sur un élément chauffant, par exemple un radiateur, et comportant dans un boîtier monté sur un adaptateur arrière une carte électronique connectée à un premier capteur de température destiné à la mesure de la température externe de la pièce et à un second capteur de température destiné à la mesure de la température de l'élément chauffant.

Un répartiteur est monté sur le radiateur et est susceptible de recevoir des chocs pouvant désolidariser le boîtier et les éléments qu'il contient, de l'adaptateur arrière fixé au radiateur. Pour détecter une telle désolidarisation, il peut être équipé d'un système permettant de détecter que le répartiteur est correctement en place sur le radiateur.

Ce système permet également de ne mettre en fonction le répartiteur que lorsqu'il est monté sur l'adaptateur, ce qui limite la consommation d'énergie, assurée par une pile ou batterie, avant l'installation, essentiellement durant le stockage.

Les documents de brevet DE 10 2004 023 990 et DE 10 2009 005 490 décrivent un répartiteur de coût de chauffage comportant un tel système.

Ce système de type élément poussoir comporte un élément flexible comprenant à son extrémité libre un contact qui est en contact avec deux pistes de la carte électronique, lorsque le boîtier est monté sur l'adaptateur, et qui est éloigné de ces pistes, lorsque le boîtier est démonté sur l'adaptateur.

Un moyen électronique de détection du contact peut ainsi détecter la présence ou l'absence du boîtier sur l'adaptateur.

Un tel système nécessite des pièces mécaniques supplémentaires constituant ce bouton poussoir.

L'objet de l'invention est d'intégrer cette fonction de détection du boîtier sur l'adaptateur aux moyens de mesure de la température de l'élément chauffant ou du radiateur, ce qui ne nécessite pas de place spécifique, minimise le nombre de pièces et donc réduit le coût en réduisant les opérations de montage.

Pour ce faire, l'invention propose un répartiteur de coût de chauffage destiné à être fixé sur un élément chauffant et comportant dans un boîtier monté sur un adaptateur arrière en métal une carte électronique dite principale connectée à un capteur de température destiné à la mesure de la température dudit élément chauffant et disposé à proximité dudit adaptateur, caractérisé en ce que ladite carte électronique principale est connectée à une carte électronique de support dudit capteur, en ce que ladite carte électronique de support dudit capteur présente un bord de forme identique à une section transversale dudit adaptateur et est disposée en butée contre cette section et en ce que ladite carte électronique de support dudit capteur comporte deux revêtements métalliques distants, ces deux revêtements métalliques venant en contact avec ledit adaptateur, lorsque le boîtier est monté sur ledit adaptateur, et étant connectés à un moyen électronique de détection de la connexion électrique de ces deux revêtements.

Selon un mode de réalisation préféré, ladite carte de support dudit capteur présente une extrémité en forme de Vé identique à une section transversale d'une rainure dudit adaptateur et est disposée en butée contre cette section.

Avantageusement, le répartiteur comporte un agencement de type piston et poussant ladite carte électronique de support dudit capteur destiné à la mesure de la température dudit élément chauffant contre ledit adaptateur.

De préférence, ladite carte électronique principale est connectée à ladite carte électronique de support dudit capteur au moyen d'au moins une nappe d'interconnexion à montage-en-surface connectée électriquement audit capteur.

Avantageusement, ladite carte électronique principale est connectée à ladite carte électronique de support dudit capteur au moyen d'un agencement de nappe(s) d'interconnexion à montage-en-surface à quatre contacts en bout connectés électriquement audit capteur et à chacun desdits revêtements métalliques.

L'invention est décrite ci-après plus en détail à l'aide de figures illustrant des modes de réalisation préféré de l'invention.
Les figures 1A et 1B sont des vues en coupe selon le plan longitudinal central d'un répartiteur conforme à l'invention.
Les figures 2A et 2B représentent des vues en coupe et en perspective d'un répartiteur conforme à l'invention.
La figure 3 représente une autre vue en coupe et en perspective d'un répartiteur conforme à l'invention.
La figure 4 est une vue partielle en perspective d'un répartiteur conforme à l'invention, avant montage.
La figure 5 est une vue en coupe transversale d'un répartiteur conforme à l'invention.

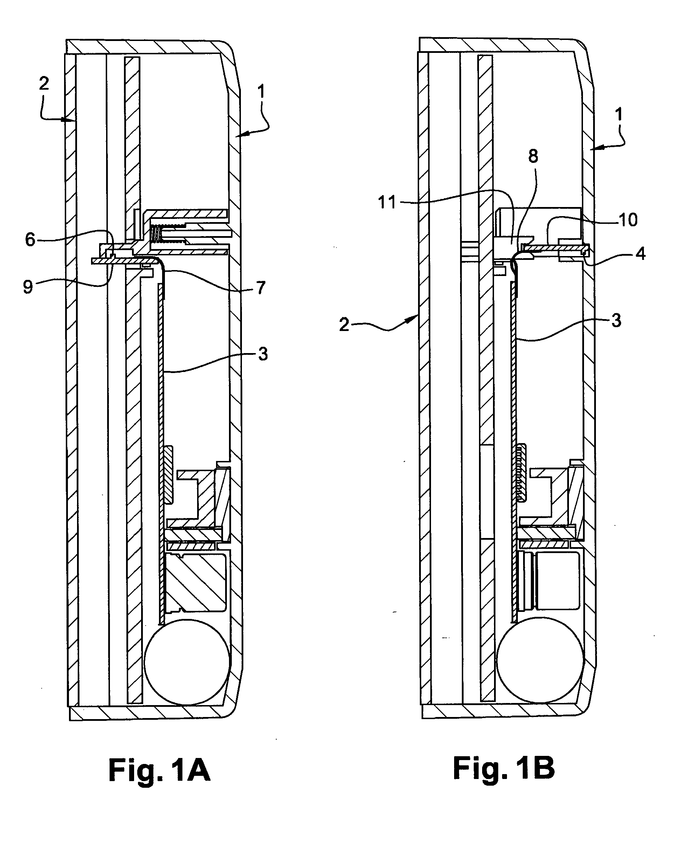

Comme représenté sur les figures 1A et 1B, illustrant la vue de part et d'autre du plan longitudinal central d'un répartiteur de coût de chauffage destiné à être fixé sur un élément chauffant, ce dernier comporte dans un boîtier 1 monté sur un adaptateur arrière 2 une carte électronique 3 ou carte de circuits imprimés disposée parallèlement à l'adaptateur 2 et connectée à un premier capteur de température 4 destiné à la mesure de la température externe et disposé à proximité du boîtier 1 et à un second capteur de température 6 destiné à la mesure de la température de l'élément chauffant et disposé à proximité de l'adaptateur 2.

La carte électronique 3, dite principale, porte au moins une nappe flexible d'interconnexion à montage-en-surface connectée à la carte électronique principale 3 et à une carte électronique de support d'un des capteurs 4,6.

Les interconnexions à montage-en-surface appelées couramment SMI (« Surface Mount Interconnect ») sont des connexions flexibles connus en soi, où les circuits imprimés flexibles sont tracés sur un support souple, généralement avec seulement une ou deux couches de cuivre.

De préférence, comme représenté, la carte électronique principale 3 porte une nappe d'interconnexion à montage-en-surface 7, 8 connectée à la carte électronique principale 3 et à une carte électronique de support 9, 10 de chacun des capteurs 4,6.

Par ailleurs, la carte électronique de support de capteur présente un bord de forme identique à une section transversale du boîtier et/ou de l'adaptateur et est disposée en butée contre cette section, comme il sera développé plus loin.

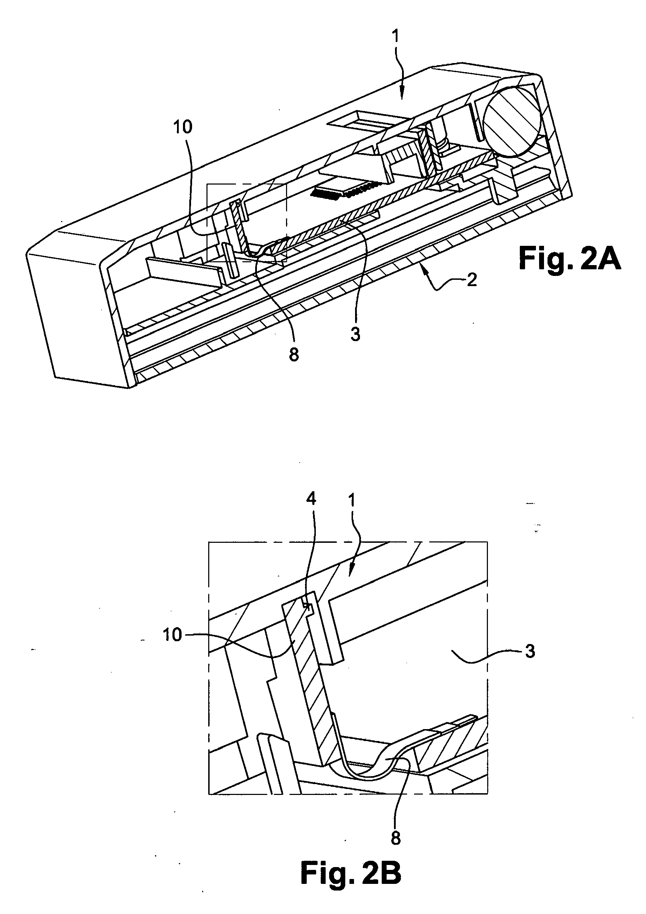

L'agencement du côté du capteur de température 4 destiné à la mesure de la température externe est particulièrement représenté sur les figures 2A et 2B.

La nappe 8 connectant la carte électronique principale 3 et la carte électronique de support 10 du capteur est pliée à 90 degrés pour amener cette carte électronique de support 10 perpendiculairement à la face intérieure du boîtier 1 où elle est logée dans une rainure du boîtier 1 et est maintenue en place par un agencement de clipage 11 représenté sur la figure 1B.

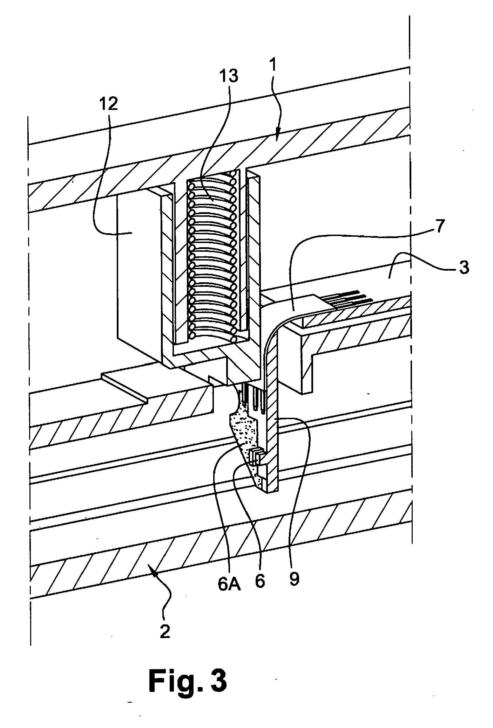

L'agencement du côté du capteur de température 6 destiné à la mesure de la température de l'élément chauffant est particulièrement représenté sur la figure 3.

La nappe 7 connectant la carte électronique principale 3 et la carte électronique de support 9 du capteur 6 est pliée à 90 degrés pour amener cette carte électronique de support 9 perpendiculairement à la face intérieure de l'adaptateur 2 où elle est logée dans une rainure longitudinale de l'adaptateur 2.

Le répartiteur comporte un agencement de type piston 12 solidarisé à cette carte de support 9 et soumis à un ressort 13 en appui contre la face intérieure du boîtier 1. Cet agencement de type piston 12 pousse la carte de support 9 du second capteur 6 contre la face intérieure de l'adaptateur 2.

Cette carte de support 9 présente une extrémité en forme de Vé identique à une section transversale de la rainure longitudinale de l'adaptateur 2 et est ainsi disposée en butée contre cette section.

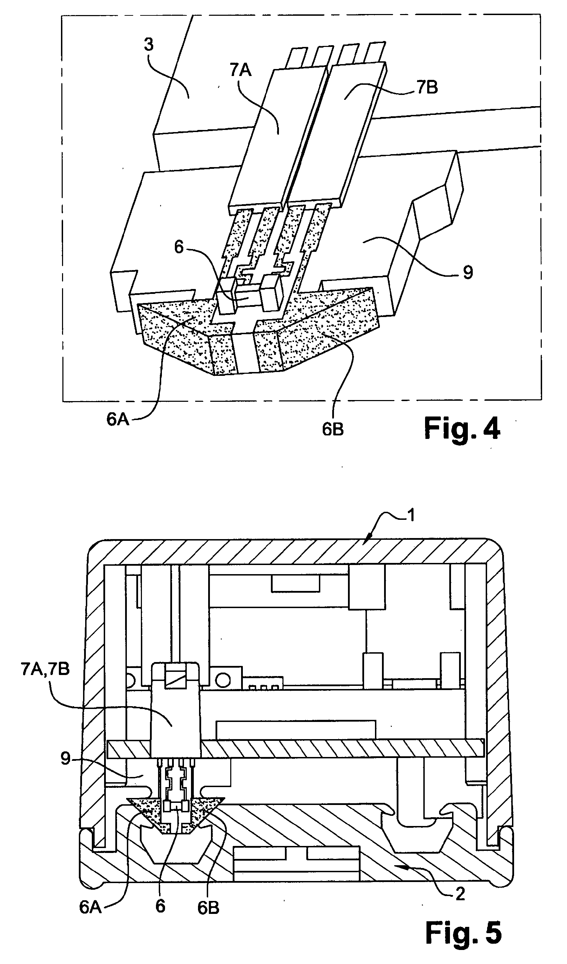

L'agencement conforme à l'invention est particulièrement visible sur la figure 4.

Selon l'invention, au moins la face latérale de l'extrémité en forme de Vé de la carte électronique de support 9 comporte deux revêtements métalliques distants 6A, 6B, de préférence en cuivre, ces deux revêtements métalliques venant en contact avec la face intérieure de l'adaptateur 2, lorsque le boîtier 1 est monté sur l'adaptateur 2, et étant connectés à un moyen électronique de détection de la connexion électrique de ces deux revêtements. Avantageusement, les faces frontales de l'extrémité en forme de Vé de la carte électronique de support 9 sont également pourvues de ces revêtements métalliques.

La nappe 7 connectant la carte électronique principale 3 et la carte électronique de support 9 du capteur 6 est une nappe à quatre contacts en bout. En variante, comme représenté, deux nappes 7A, 7B à deux contacts en bout disposées l'une à côté de l'autre peuvent être utilisées comme représentées sur la figure 4.

Deux de ces contacts, centraux, sont connectés par des pistes correspondantes au capteur 6, pour la mesure de la température de l'élément chauffant sur le lequel est monté l'adaptateur 3.

Deux autres de ces contacts, en bordure, sont connectés respectivement par des pistes correspondantes à chacun des revêtements métalliques distants 6A, 6B pour la détection de la présence ou de l'absence du boîtier 1 et des éléments qu'il contient, sur l'adaptateur 2.

Lorsque le répartiteur est en place, c'est-à-dire que l'adaptateur 2 est monté sur l'élément chauffant et le boîtier 1 est solidarisé sur l'adaptateur, comme représenté sur la figure 5, l'extrémité en forme de Vé de la carte de support 9 est disposée en butée contre la rainure longitudinale de l'adaptateur 2.

Cette disposition assure :
- d'une part, une conduction thermique entre l'adaptateur 2 et le capteur 6, améliorée par la présence des deux revêtements métalliques 6A, 6B, afin de permettre la mesure de la température de l'élément chauffant sur le lequel est monté l'adaptateur 3 ;
- d'autre part, une conduction électrique commandée entre les deux revêtements métalliques 6A, 6B via l'adaptateur 2, afin de permettre la détection de la présence du boîtier 1 et des éléments qu'il contient, sur l'adaptateur 2.

En cas de détachement du boîtier 1 et des éléments qu'il contient, l'extrémité en forme de Vé de la carte de support 9 est détachée de la rainure de l'adaptateur 2 et la détection de l'absence de conduction électrique commandée entre les deux revêtements métalliques 6A, 6B permet de déterminer ce détachement.

## Revendications

1. Répartiteur de coût de chauffage destiné à être fixé sur un élément chauffant et comportant dans un boîtier (1) monté sur un adaptateur arrière en métal (2) une carte électronique (3) dite principale connectée à un capteur de température (6) destiné à la mesure de la température dudit élément chauffant et disposé à proximité dudit adaptateur (2), dans lequel ladite carte électronique principale (3) est connectée à une carte électronique de support (9) dudit capteur (6), **caractérisé en ce que** ladite carte électronique de support (9) dudit capteur présente un bord de forme identique à une section transversale dudit adaptateur (2) et est disposée en butée contre cette section transversale et **en ce que** ladite carte électronique (9) de support dudit capteur (6) comporte deux revêtements métalliques distants (6A, 6B), ces deux revêtements métalliques venant en contact avec ledit adaptateur (2), lorsque le boîtier (1) est monté sur ledit adaptateur (2), et étant connectés à un moyen électronique de détection de la connexion électrique de ces deux revêtements.

2. Répartiteur selon la revendication précédente, **caractérisé en ce que** ladite carte de support (9) dudit capteur (6) présente une extrémité en forme de Vé identique à une section transversale d'une rainure dudit adaptateur (2) et est disposée en butée contre cette section.

3. Répartiteur selon la revendication 1 ou 2, **caractérisé en ce qu'**il comporte un agencement de type piston (12) et poussant ladite carte électronique (9) de support dudit capteur (6) destiné à la mesure de la température dudit élément chauffant contre ledit adaptateur (2).

4. Répartiteur selon l'une des revendications précédentes, **caractérisé en ce que** ladite carte électronique principale (3) est connectée à ladite carte électronique de support (9) dudit capteur (6) au moyen d'au moins une nappe d'interconnexion à montage-en-surface (7A, 7B) connectée électriquement audit capteur.

5. Répartiteur selon la revendication précédente, **caractérisé en ce que** ladite carte électronique principale (3) est connectée à ladite carte électronique de support (9) dudit capteur (6) au moyen d'un agencement de nappe(s) d'interconnexion à montage-en-surface (7A, 7B) à quatre contacts en bout connectés électriquement audit capteur et à chacun desdits revêtements métalliques.

## Patentansprüche

1. Heizkostenverteiler, der dazu bestimmt ist, auf einem Heizelement angeordnet zu werden, und umfassend in einem Gehäuse (1), das auf einem hinteren Adapter aus Metall (2) montiert ist, eine so genannte Haupt-Elektronikkarte (3), die an einem Temperaturfühler (6) angeschlossen ist, der zum Messen der Temperatur des Heizelements bestimmt und in der Nähe des Adapters (2) angeordnet ist, bei dem die Haupt-Elektronikkarte (3) an einem Neben-Elektronikkarte (9) des Fühlers (6) angeschlossen ist, **dadurch gekennzeichnet, dass** die Neben-Elektronikkarte (9) des Fühlers einen Rand von identischer Form mit einem Querschnitt des Adapters (2) aufweist und am Anschlag an diesem Querschnitt angeordnet ist, und dass die Neben-Elektronikkarte (9) des Fühlers (6) zwei voneinander entfernte Metallverkleidungen (6A, 6B) umfasst, wobei diese beiden Metallverkleidungen mit dem Adapter (2) in Kontakt kommen, wenn das Gehäuse (1) auf dem Adapter (2) montiert ist, und an ein elektronisches Erfassungsmittel des elektrischen Anschlusses dieser beiden Verkleidungen angeschlossen sind.

2. Verteiler nach dem vorhergehenden Anspruch, **dadurch gekennzeichnet, dass** die Nebenkarte (9) des Fühlers (6) ein Ende in Form eines V identisch mit einem Querschnitt einer Nut des Adapters (2) aufweist und am Anschlag an diesen Querschnitt angeordnet ist.

3. Verteiler nach Anspruch 1 oder 2, **dadurch gekennzeichnet, dass** er eine Anordnung vom Typ Kolben (12) umfasst und die Neben-Elektronikkarte (9) des Fühlers (6), der zum Messen der Temperatur des Heizelements bestimmt ist, gegen den Adapter (2) schiebt.

4. Verteiler nach einem der vorhergehenden Ansprüche, **dadurch gekennzeichnet, dass** die Haupt-Elektronikkarte (3) an die Neben-Elektronikkarte (9) des Fühlers (6) mit Hilfe mindestens einer an der Oberfläche montierten Verbindungsschicht (7A, 7B) angeschlossen ist, die elektrisch an den Fühler angeschlossen ist.

5. Verteiler nach dem vorhergehenden Anspruch, **dadurch gekennzeichnet, dass** die Haupt-Elektronikkarte (3) an die Neben-Elektronikkarte (9) des Fühlers (6) mit Hilfe einer Anordnung von an der Oberfläche montierten Verbindungsschichten (7A, 7B) mit vier Kontakten angeschlossen ist, die elektrisch an den Fühler und an jede der Metallverkleidungen angeschlossen sind.

## Claims

1. Heating cost allocator intended to be fixed on a heating element and having, in a housing (1) mounted on a rear adapter (2) made of metal, a so-called main electronic card (3) connected to a temperature sensor (6) intended for the measurement of the temperature of said heating element and disposed close to said adapter (2), wherein said main electronic card (3) is connected to an electronic support card (9) of said sensor (6), **characterised in that** the said electronic support card (9) of the said sensor has an edge of shape identical to a cross-section of said adapter (2) and is disposed in abutment against this cross-section and **in that** said electronic support card (9) of said sensor (6) includes two spaced metal coatings (6A, 6B), these two metal coatings coming into contact with said adapter (2), when the housing (1) is mounted on said adapter (2), and being connected to an electronic means for detection of the electrical connection of these two coatings.

2. Allocator as claimed in the preceding claim, **characterised in that** said support card (9) of said sensor (6) has a V-shaped end identical to a cross-section of a groove of said adapter (2) and is disposed in abutment against this section.

3. Allocator as claimed in Claim 1 or 2, **characterised in that** it includes an arrangement of the piston type (12) pushing said electronic support card (9) for said sensor (6) intended for the measurement of the temperature of said heating element against said adapter (2).

4. Heating cost allocator as claimed in one of the preceding claims, **characterised in that** said main electronic card (3) is connected to said electronic support card (9) for said sensor (6) by means of at least one surface-mounting interconnection ribbon cable (7A, 7B) electrically connected to said sensor.

5. Heating cost allocator as claimed in the preceding claim, **characterised in that** said main electronic card (3) is connected to said electronic support card (9) for said sensor (6) by means of a surface-mounting interconnection ribbon cable (7A, 7B) with four butt contacts electrically connected to said sensor and to each of said metal coatings..
